# FASCICULE DE BREVET EUROPEEN

(11) **EP 0 524 076 B1**
(45) Date de publication et mention de la délivrance du brevet: **30.09.1998**
(21) Numéro de dépôt: 92402017.5
(22) Date de dépôt: 10.07.1992
(51) Int. Cl.: G06F 9/44, G06F 9/46

(54) **Système logiciel composite et son procédé de réalisation**
Zusammengesetztes Softwaresystem und sein Herstellungsverfahren
Composite software system and method for designing the same

(30) Priorité: 16.07.1991 FR 9108986
(43) Date de publication de la demande: 20.01.1993
(73) Titulaire: ALCATEL ALSTHOM COMPAGNIE GENERALE D'ELECTRICITE, 75008 Paris (FR)
(72) Inventeur: Collet, Edouard, F-22700 Perros Guirec (FR)
(74) Mandataire: Bourely, Paul

(56) Documents cités:
- EP-A- 0 405 829
- TECHNIQUE ET SCIENCE INFORMATIQUES. vol. 6, no. 2, 1987, NEUILY SUR SEINE, FR pages 166 - 169 M. SHAPIRO ET AL. 'SOS: UN SYSTEME D'EXPLOITATION REPARTI FONDE SUR LES OBJETS'
- THE 11TH ANNUAL INTERNATIONAL SYMPOSIUM ON COMPUTER ARCHITECTURE 5 Juin 1984, ANN ARBOR, MI, US pages 178 - 187 Y. ISHIKAWA ET AL. 'THE DESIGN OF AN OBJECT ORIENTED ARCHITECTURE'
- MICROPROCESSING AND MICROPROGRAMMING. vol. 24, no. 1-5, 1988, AMSTERDAM, NL pages 257 - 265 K.W. PLESSMANN ET AL. 'CONCURRENT OBJECT-ORIENTED PROGRAM DESIGN IN REAL-TIME SYSTEMS'

## Description

La présente invention concerne un système logiciel. Elle s'applique avantageusement à la formation d'un système logiciel volumineux, c'est-à-dire comportant un nombre d'instructions pouvant aller de 10⁵ à 10⁶ en un langage évolué constituant un langage source. Elle s'applique par exemple à l'écriture d'un système destiné à un central de commutation dans un réseau de télécommunications.

Les instructions d'un tel système sont écrites en un langage évolué tel que le langage CHILL défini par le comité européen CCITT. Son coût d'écriture, exprimé en temps, est typiquement d'une centaine d'année-homme. Après son écriture, il est souvent nécessaire qu'il subisse des évolutions telles que des adaptations à des conditions nouvelles. Ces évolutions peuvent constituer une fraction importante de son coût final.

Il est connu de donner à des systèmes logiciels une structure composite constituée de composants logiciels. Ces composants peuvent être par exemple soit des "blocs fonctionnels" opérant sur des données qui leur sont extérieures, soit des "objets" regroupant des données et des procédures les utilisant. On citera à cet égard les systèmes à blocs fonctionnels SDL du CCITT et ESTELLE de l'ISO. Chaque composant logiciel remplit une fonction qui lui est attribuée. Il peut pour cela avoir recours à un autre composant pour accomplir une partie des opérations impliquées par cette fonction. Les composants communiquent entre eux par des messages.

La construction et l'évolution des systèmes connus est rendue difficile et coûteuse par l'importance des interactions qui existent entre ces composants et qui nécessitent la définition de plusieurs interfaces pour chacun d'eux.

Le document : TECHNIQUE ET SCIENCE INFORMATIQUES, vol. 6, no. 2, 1987, Neuilly sur Seine, FR, pages 166-169; M. SHAPIRO ET AL. 'SOS : UN SYSTEME D'EXPLOITATION REPARTI FONDE SUR LES OBJETS', contient un system orienté objects montrant l'utilisation des messages pour communication.

La présente invention a notamment pour but de faciliter non seulement la réalisation d'un système logiciel volumineux efficace mais aussi sa maintenance et son évolution. Elle a notamment pour but de faciliter les nombreuses opérations de tests qui accompagnent les opérations d'écriture correspondantes.

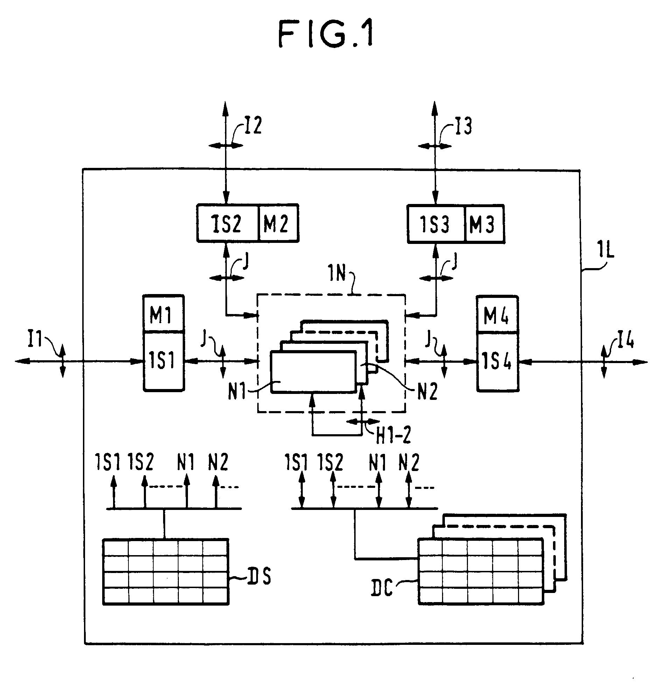

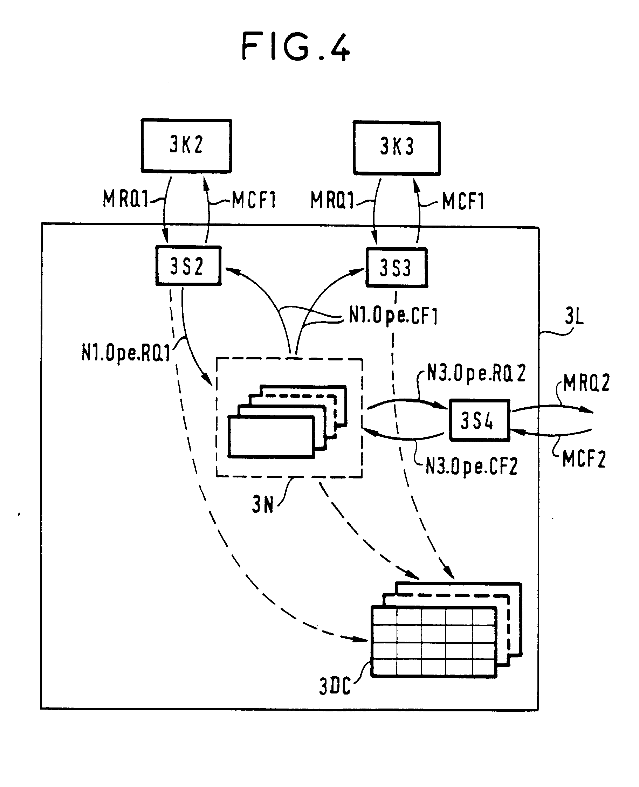

Dans ces buts, elle a pour objet un système logiciel composite constitué d'une pluralité de composants logiciels communiquant par des messages "externes", chacun de ces composants effectuant des opérations qui sont déclenchées par de tels messages reçus par ce composant et qui aboutissent à de tels messages émis par ce composant, ce système étant caractérisé par le fait que ces composants sont, au moins dans leur majorité, conformes à une même structure selon laquelle chaque tel composant conforme (1L, fig. 1) comporte de manière distincte:
- une pluralité de ports de communication (1S1,...1S4) associés respectivement à une pluralité d'interfaces (I1,...I4) de ce composant,
- un noyau (1N) constitué par des procédures de traitement de fond et communiquant avec chacun de ces ports pour effectuer des traitements de fond demandé par ce port,
- et des modules de données (DS, DC) accessibles par chacun de ces ports et par ce noyau pour enregistrer des données inscrites par ces ports et noyau et pour fournir des données lues par ces ports et noyau,
chaque dit message externe local (MRQ, fig.3) adressé à un composant conforme comportant non seulement l'adresse de ce composant mais aussi celle d'un port (2S2) de ce composant auquel ce message est plus particulièrement adressé, ce port effectuant sur ce message un traitement d'interface pouvant comporter l'inscription et/ou à la lecture de données dans ces modules de données, et pouvant constituer soit un traitement d'interface complet aboutissant à l'émission d'un message externe par ce port, soit un traitement d'interface d'entrée aboutissant à l'émission d'un message interne centripète (N1. Opé. RQ) envoyé par ce port au noyau (1N) pour lui demander un traitement de fond, ce traitement de fond pouvant comporter l'inscription et/ou la lecture de données dans ces modules de données, ce traitement de fond aboutissant à l'émission d'un message interne centrifuge (N1. Opé. CF) envoyé par ce noyau aux divers ports de ce composant, ce message pouvant appartenir à divers types et comportant une indication du type auquel il appartient, chaque port de ce composant étant apte, en réponse à des messages qu'il reçoit à devenir sélectivement sensible à un type de message interne centrifuge, et étant apte, en réponse à un message interne centrifuge auquel il est sensible, à effectuer un traitement d'interface de sortie aboutissant à l'émission d'un message externe (MCF) par ce port.

Ces ports de communication peuvent typiquement avoir un volume individuel compris entre quelques centaines et quelques milliers d'instructions. Ils seront parfois appelés ci-après "ports". Ils présentent, comme le noyau, la forme de modules logiciels.

Un tel composant a un volume typiquement compris entre 0,5.10⁴ et 2.10⁴ instructions. Il se présente comme un "prestataire de service". Il échange desdits messages externes notamment avec d'autres tels composants qui constituent pour lui des "prestataires de services" ou des "utilisateurs de service".

L'utilisation, selon l'invention, de composants présentant une structure modulaire type facilite leur réalisation, leur vérification et leur évolution.

A l'aide des figures schématiques ci-jointes, on va décrire plus particulièrement ci-après, à titre d'exemple non limitatif, comment la présente invention peut être mise en oeuvre. Ces figures représentent des composants conformes à la structure type de la présente invention. Lorsque des éléments homologues appartenant à des composant différents sont désignés sur plusieurs figures ils le sont par un même signe de référence avec des préfixes constitués par des chiffres différents propres à ces composants.

La figure 1 représente un premier composant, ledit préfixe des signes de référence étant 1, cette figure illustrant tous les éléments essentiels de la structure type prévue par cette invention.

Les figures 2 et 3 représentent partiellement un deuxième composant et la transmission de messages dans deux situations différentes, ledit préfixe étant 2.

Les figures 4 et 5 représentent partiellement un troisième et un quatrième composants et la transmission de messages, lesdits préfixes étant 3 et 4, respectivement.

On va d'abord indiquer de manière générale, et en se référant à la figure 1, des dispositions qui sont communes, quant aux fonctions indiquées, à des systèmes logiciels connus et à un système selon la présente invention.

Selon ces dispositions communes un système logiciel est constitué d'instructions et de données qui sont écrites en un langage source et traduites en un langage exécutable et qui sont groupées dans ce langage source en une pluralité de composants. Ces composants sont des composants logiciels. Ils sont munis d'interfaces et de ports associés à ces interfaces. Ces ports sont des ports de communication constitués de procédures de traitement d'interface pour émettre et recevoir des messages externes locaux et non locaux. Un message externe local est adressé par un composant émetteur à un composant destinataire à l'intérieur du système, un message externe non local étant échangé avec l'extérieur du système.

Chacun de ces composants est prévu pour effectuer des opérations impliquées par les messages externes reçus par ce composant, ces opérations comportant des traitements effectués à l'intérieur de ce composant en réponse à ces messages externes reçus, et aboutissant à l'émission d'autres messages externes. L'ensemble des opérations d'un composant constitue le fonctionnement de ce composant et l'ensemble des fonctionnements des composants constitue le fonctionnement du système.

Conformément à la présente invention ces composants sont, au moins dans leur majorité, conformes à une même structure type selon laquelle chaque tel composant conforme 1L comporte de manière distincte :
- une pluralité de ports de communication 1S1...1S4 associés respectivement à une pluralité d'interfaces I1,...I4 de ce composant,
- un noyau 1N constitué par des procédures de traitement de fond et communiquant avec chacun de ces ports pour effectuer des traitements de fond demandés par ce port,
- et des modules de données DS, DC accessibles par chacun de ces ports et par ce noyau pour enregistrer des données inscrites par ces ports et noyau et pour fournir des données lues par ces ports et noyau.
Chaque message externe local adressé à un composant conforme comporte non seulement des "paramètres" représentatifs d'information et l'adresse de ce composant mais aussi celle d'un port de ce composant auquel ce message est plus particulièrement adressé. Ce port effectue sur ce message un traitement d'interface pouvant comporter l'inscription et/ou la lecture de données dans les modules de données. Ce traitement peut constituer soit, dans quelques cas, un traitement d'interface complet aboutissant à l'émission d'un message externe par ce port, soit, typiquement, un traitement d'interface d'entrée aboutissant à l'émission d'un message interne centripète envoyé par ce port au noyau pour lui demander un traitement de fond. Ce traitement de fond peut comporter l'inscription et/ou la lecture de données dans les modules de données. Il aboutit à l'émission d'un message interne centrifuge envoyé par ce noyau aux divers ports de ce composant. Ce message peut appartenir à divers types et comporte une indication du type auquel il appartient. Chaque port de ce composant est apte, en réponse à des messages qu'il reçoit, à devenir sélectivement sensible à un type de message interne centrifuge. Il devient ainsi apte, en réponse à un message interne centrifuge auquel il est sensible, à effectuer un traitement d'interface de sortie aboutissant à l'émission d'un message externe par ce port. Pour donner un exemple simple des rôles des divers ports, un port de communication peut servir à l'exécution des opérations pour lesquelles le composant est prévu, un autre à l'exécution d'opérations de maintenance, et un troisième à l'observation du trafic dans le cas où le système logiciel assure le fonctionnement d'un central de commutation dans un réseau de télécommunications. Il est évident que les traitements effectués diffèrent selon que le composant est sollicité par l'un ou l'autre de ces ports de communications.

Le noyau 1N effectue des traitements de fond constituant collectivement la ou les fonctions dévolues au composant. Il comporte une pluralité de modules de noyau N1...N3 effectuant respectivement une pluralité de traitements de fond. Chacun de ces modules échange des messages internes centraux avec d'autres de ces modules, et des messages internes centripètes et centrifuges avec lesdits ports de communication.

Les modules de données comportent d'une part des modules de structure DS contenant des données de structure, ces données étant descriptives de la structure de ce composant et du système et étant seulement lues par les ports et le noyau de ce composant. Ils comportent d'autre part des modules de contexte DC contenant des données de contexte, ces données étant descriptives de l'évolution d'opérations effectuées par ce composant et par le système, et étant aussi bien inscrites que lues par les ports et le noyau de ce composant.

Des interfaces de composant I1,...I4 sont associés aux ports 1S1...1S4 pour communiquer avec l'extérieur du composant 1l. Chaque interface telle que I2 du composant 1L définit les échanges entre un autre composant 1K2, vu comme utilisateur du composant 1L, et un port de communication correspondant 1S2 du composant 1L vu comme prestataire de services. La mise en oeuvre du composant 1L à partir d'un autre composant tel que 1K2 s'obtient ainsi par la transmission d'un message externe du composant 1K2 à l'un des ports 1S2 par exemple, du composant 1L conformément à un protocole de communication matérialisé par l'interface correspondante I2. On peut définir généralement un protocole de communication, au niveau de l'interface, comme l'ensemble des règles de constitution et des processus d'interprétation de tels messages, en y incluant l'accomplissement des actions de communication qui sont demandées par le contenu de tels messages.

Conformément à l'un des aspects de l'invention, le protocole de communication appartient au port de communication du composant prestataire de services destinataire d'un message.

Par ailleurs des interfaces internes au composant sont prévues. Certaines telles que H1-2 relient deux modules de noyau tels que N1 et N2. D'autres, non représentés, relient ces divers éléments aux modules de données DS et DC. Une interface J est propre au noyau et utiliseé par les divers ports. Cela signifie que la communication entre les différents ports et le noyau obéit à des règles communes de communication et que les ports réalisent, en tant que de besoin, l'adaptation entre les divers protocoles d'interfaces du composant et le noyau.

Chaque port et chaque module de noyau présente la forme d'un automate à états finis.

Chaque port comporte des moyens de stockage de message M1,...M4 et est apte à connaître l'état du noyau de ce composant. Lorsqu'il reçoit un message externe nécessitant un traitement de fond, ce port stocke provisoirement ce message et émet, pour connaître cet état, un message interne centripète de test d'activité auquel ce noyau répond par l'émission d'un message interne centrifuge d'état indiquant l'état d'activité de ce noyau. Puis ce port adresse un message interne centripète à ce noyau pour demander le traitement de fond seulement lorsque ce noyau est en état d'effectuer ce traitement. Le fonctionnement du composant est ainsi rendu synchrone alors que celui du système est asynchrone.

Les messages externes adressés aux ports de communication sont traités par ces ports qui se chargent, chacun pour son compte de prendre en charge un message entrant.

Cette prise en charge consiste à effectuer sur ce message un traitement d'interface basé sur une analyse de ce message et aboutissant, du moins typiquement à l'émission d'un message interne au composant 1L, ce traitement constituant alors un traitement d'interface d'entrée. Ce message est appelé dans la présente demande "message interne centripète". Il prend typiquement la forme d'un ordre de traitement de fond adressé au noyau N de ce composant pour l'exécution d'un traitement de fond effectué sur des paramètres qui étaient contenus dans le message externe reçu.

Plus précisément et à titre d'exemple un port tel que 1S2 est sensible à des messages ou événements externes et internes. En cas de réception de message externe nécessitant un traitement de fond dans le noyau, il examine d'abord l'état d'activité du noyau et éventuellement des modules de données.

Si cet état est du type dit "en cours" c'est-à-dire si le traitement en question est déjà en cours d'exécution dans le noyau parce qu'un autre port l'a déjà demandé, le port 1S2 masque le message reçu, c'est-à-dire qu'il attend le résultat de ce traitement. En même temps, il se sensibilise au type du message interne centrifuge qui marquera la fin de ce traitement, ceci pour pouvoir utiliser le moment venu le résultat de ce traitement.

Si au contraire cet état est du type "repos", c'est-à-dire si le traitement de fond peut être effectué, le port 1S2 demande au noyau de le faire.

En cas de réception d'un message interne centrifuge auquel le port S2 est sensibilisé, ce port effectue un traitement d'interface de sortie en vue par exemple d'émettre un message externe.

Bien entendu d'autres situations peuvent se présenter dont la description n'est pas nécessaire à la compréhension de la présente invention.

Pour faciliter encore l'écriture d'un système, les instructions concernant les échanges de message externes tels que MRQ et MCF, (fig.3) et les instructions concernant les échanges de messages internes tels que N1.Opé.RQ et N1.Opé.CF sont écrites en utilisant des règles de nommage analogues pour les divers éléments, soit composants et ports en ce qui concerne les messages externes, soit modules de noyau ou de données en ce qui concerne les messages internes. Cependant les utilisateurs externes du composant ne connaissent rien d'autre de la structure interne de ce dernier que l'existence de ses divers ports.

On va maintenant décrire plus particulièrement des exemples de fonctionnement de composants conformes à la structure type qui vient d'être décrite.

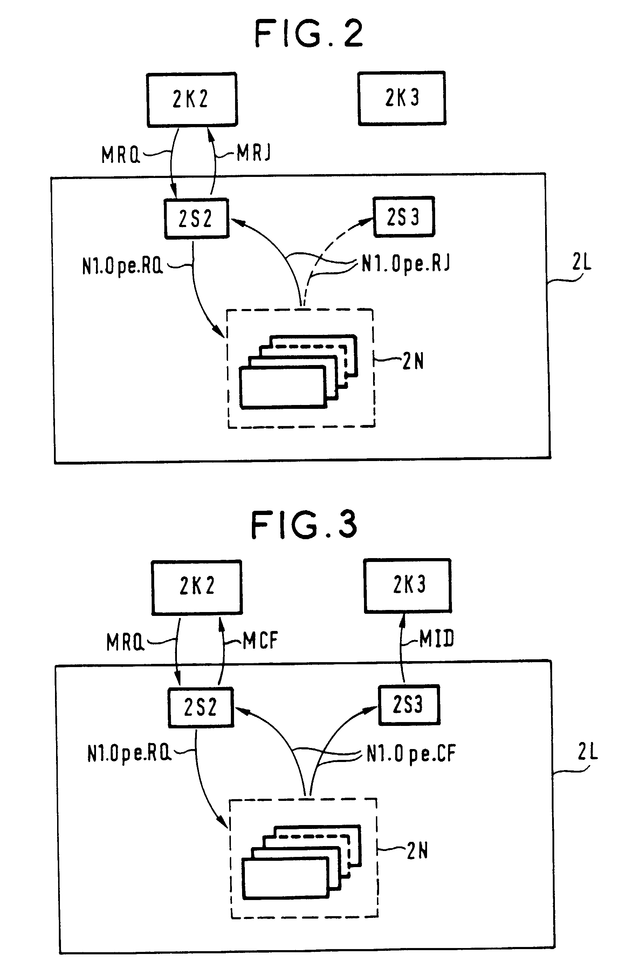

Le composant 2L représenté aux figures 2 et 3 peut fonctionner, au moins dans certains cas, selon le type dit relais. On va décrire son fonctionnement dans un tel cas. Pour cela et dans la suite on va utiliser des conventions de désignation des messages internes. Un message interne est formé de trois éléments : Identité d'un module du noyau, opération à réaliser, type de requête (RQ = demande, CF = confirmation, RJ = rejet, etc...)
- a/ Présentation du cas :
   Un message "externe" MRQ est émis par un composant utilisateur 2K2 et reçu sur le port 2S2. Il déclenche un traitement d'interface d'entrée qui se traduit par l'envoi d'un message interne centripète N1.Ope.RQ à un module du noyau 2N.
   En cas d'anomalie de traitement détectée par ce noyau et annoncée par un message interne centrifuge N1.Ope.RJ, le composant 2L doit répondre au message reçu MRQ par l'émission d'un message externe de rejet MRJ. Ce dernier est émis par le port 2S2 à destination de l'utilisateur 2K2, ceci parce que ce port était sensible au type du message interne N1.Ope.RJ alors que le port 2S3 ne l'est pas (voir figure.2).
   - En cas de traitement correct le noyau répond par un message interne centrifuge N1.Ope.CF. Un message externe d'indication MID est alors émis par le port 2S3 à destination d'un utilisateur 2K3 et un message de confirmation MCF est émis par le port 2S2 à destination du composant 2K2, ceci parce que les ports 2S2 et 2S3 étaient tous les deux sensibles à ce type de message interne tout en ayant des protocoles de traitement différents.
- b/ Explication des messages échangés dans le composant logiciel.
   - Le port 2S2 reçoit le message externe MRQ.
   - Le port 2S2 émet vers le noyau le message interne N1.Opé.RQ (destinataire N1, opération "Opé", type de requête "demande").
   - le noyau traite ce message :
   - Dans le cas d'anomalie, le noyau répond par le message N1.Opé.RJ qui est capté par le port 2S2. Ce dernier émet le message externe de rejet MRJ.
   - Dans le cas de traitement correct, le noyau répond par le message N1.Opé.CF qui est capté par les ports 2S2 et 2S3. Le port 2S2 émet alors un message externe de confirmation MCF pour indiquer au composant 2K2 qu'il a traité le message MRQ envoyé par ce même composant 2K2. Quant au port 2S3 qui n'a pas reçu le message MRQ, il adresse au composant 2K3 un message externe d'indication MID pour lui indiquer qu'un message MRQ a été émis par un autre composant 2K2 et a été traité par le composant 2L.

Le composant 3L de la figure 4 est analogue au composant 2L mais on va décrire son fonctionnement dans un cas de croisement de messages externes qui est légèrement différent du cas précédemment décrit.
a) Présentation du cas.
   Ce cas de croisement est le suivant : Un même message externe MRQ1 est reçu à peu près simultanément d'abord par le port 3S2 puis par le port 3S3 du composant 3L. Le traitement de ce message est quasi immédiatement demandé par le port 3S2. Il comporte un état d'attente du noyau 3N de ce composant. Cet état d'attente débute avant que le port 3S3 ait reçu le message MRQ1, par exemple lorsque le port 3S4 reçoit un message interne centrifuge N3.Opé.RQ2 de ce noyau dans le cadre de ce traitement et émet un message externe MRQ2, puis attend la réponse. Cet état d'attente se termine postérieurement à la réception du message MRQ1 par le port 3S3, par exemple lorsque le port 3S4 reçoit la réponse attendue sous la forme d'un message externe MCF2 et la transmet au noyau sous la forme d'un message interne N3.Opé.CF1. Dans ce cas il convient que le traitement du message MRQ1 aboutisse à l'émission de deux messages externes de confirmation MCF1 par les deux ports 3S2 et 3S3 et non à celle d'un message d'indication tel que le message MID du cas précédent.
b) Explication des messages échangés dans le composant logiciel.
   - Le port 3S2 reçoit le message externe MRQ1,
   - Le port 3S2 effectue le test d'activité du noyau. La réponse est "repos". Ce port émet alors un message interne centrifuge N1.Opé.RQ1 et se sensibilise au type de message N1.Opé.CF1 qui constituera le résultat de ce traitement.
   - Le noyau traite le message N1.Opé.RQ1, émet des messages tels que N3.Opé.RQ2 capté par le port 3S4 et se met en état d'attente.
   - Le port 3S3 reçoit le message MRQ1. Il effectue le test d'activité du noyau. La réponse à ce test est "en-cours", ce qui signifie que le traitement approprié a déjà été demandé. Ce port se met donc à l'écoute de la fin de ce traitement c'est-à-dire qu'il se sensibilise lui aussi au type de message N1.Opé.CF1. Suite à réception du message tels que N3.Opé.CF2 de la part du port 3S4, et à l'achévement du traitement de fond, le noyau 3N émet le message N1.Opé.CF1.
   - Les ports 3S3 et 3S4 captent le message N1-Opé.CF1 et répondent comme suit :
   - Le port 3S2 émet le message externe MCF1.
   - Le port 3S3 émet aussi MCF1 (c'est lui qui a enregistré le "croisement" des deux messages MRQ1 et il répond comme s'il avait été seul à recevoir un tel message).

Des traits tiretés représentent sur la figure des messages internes échangés avec le module de contexte 3DC pendant les traitements qui viennent d'être décrits.

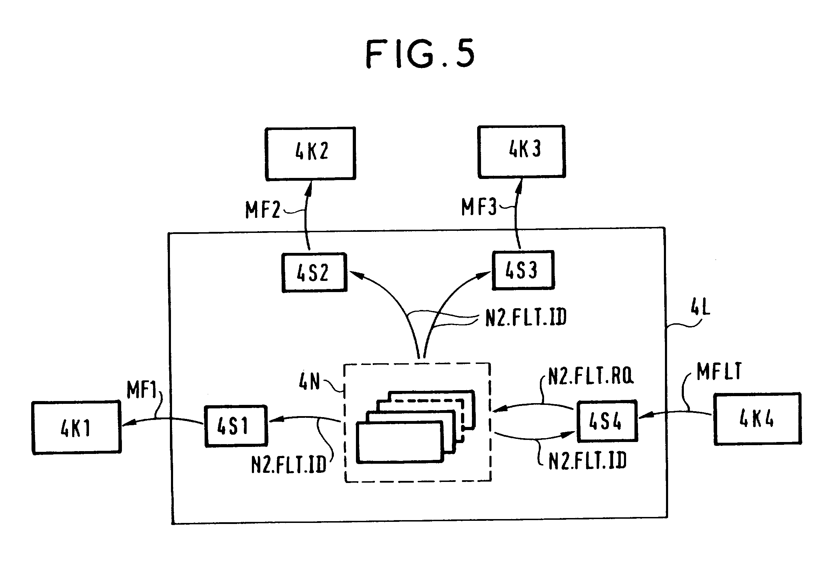

Le quatrième composant 4L représenté à la figure 5 est utilisé dans un cas dit de diffusion interne au composant.
- a) Présentation du cas :
   Le port 4S4 reçoit un message "externe" MFLT caractéristique d'un mauvais fonctionnement d'un autre composant 4K4. Ce port déclenche alors un traitement qui doit se traduire par une libération de la transaction concernée, c'est-à-dire par un arrêt et une annulation des traitements déjà effectués dans le cadre de cette transaction. Ce traitement doit se traduire par ailleurs par l'émission de messages de faute MF1, MF2, MF3 vers d'autres composants logiciels 4K1, 4K2, 4K3.
- b) Explication des messages échangés dans le composant logiciel 4L.
   - Le port 4S4 reçoit le message externe MFLT en provenance du composant 4K4.
   - Il émet vers le noyau 4N le message interne centripète N2.FLT.RQ.
   - Ce noyau traite ce message en réalisant la libération de la transaction concernée. Il signale la situation par l'émission d'un message interne centrifuge N2.FLT.ID.
   - Chacun des ports 4S1, 4S2 et 4S3 est sensible de manière permanente à ce message. Il y réagit et émet un message externe spécifique du protocole de l'interface de composant qui lui est associée c'est-à-dire que les ports 4S1, 4S2 et 4S3 émettent des messages de faute MF1, MF2 et MF3 vers les composants 4K1, 4K2 et 4K3, respectivement.

## Revendications

1. Système logiciel composite, ce système étant constitué d'instructions et de données qui sont écrites en un langage source et traduites en un langage exécutable et qui sont groupées dans ce langage source en une pluralité de composants, ces composants étant des composants logiciels munis d'interfaces et de ports associés à ces interfaces, ces ports étant des ports de communication constitués de procédures de traitement d'interface pour émettre et recevoir des messages externes locaux et non locaux, un message externe local étant adressé par un composant émetteur à un composant destinataire à l'intérieur du sytème, un message externe non local étant échangé avec l'extérieur du système, chacun de ces composants étant prévu pour effectuer des opérations impliquées par les messages externes reçus par ce composant, ces opérations comportant des traitements effectués à l'intérieur de ce composant en réponse à ces messages externes reçus, et aboutissant à l'émission d'autres messages externes, l'ensemble des opérations d'un composant constituant ce fonctionnement de ce composant et l'ensemble des fonctionnements des composants constituant le fonctionnement du système,
ce système étant caractérisé par le fait que ces composants sont, au moins dans leur majorité, conformes à une même structure selon laquelle chaque tel composant conforme (1L, fig. 1) comporte de manière distincte :
- une pluralité de ports de communication (1S1,...1S4) associés respectivement à une pluralité d'interfaces (I1,...I4) de ce composant,
- un noyau (1N) constitué par des procédures de traitement de fond et communiquant avec chacun de ces ports pour effectuer des traitements de fond demandé par ce port,
- et des modules de données (DS, DC) accessibles par chacun de ces ports et par ce noyau pour enregistrer des données inscrites par ces ports et noyau et pour fournir des données lues par ces ports et noyau,
chaque dit message externe local (MRQ, fig.3) adressé à un composant conforme comportant non seulement l'adresse de ce composant mais aussi celle d'un port (2S2) de ce composant auquel ce message est plus particulièrement adressé, ce port effectuant sur ce message un traitement d'interface pouvant comporter l'inscription et/ou à la lecture de données dans ces modules de données, et pouvant constituer soit un traitement d'interface complet aboutissant à l'émission d'un message externe par ce port, soit un traitement d'interface d'entrée aboutissant à l'émission d'un message interne centripète (N1. Opé. RQ) envoyé par ce port au noyau (1N) pour lui demander un traitement de fond, ce traitement de fond pouvant comporter l'inscription et/ou la lecture de données dans ces modules de données, ce traitement de fond aboutissant à l'émission d'un message interne centrifuge (N1. Opé. CF) envoyé par ce noyau aux divers ports de ce composant, ce message pouvant appartenir à divers types et comportant une indication du type auquel il appartient, chaque port de ce composant étant apte, en réponse à des messages qu'il reçoit à devenir sélectivement sensible à un type de message interne centrifuge, et étant apte, en réponse à un message interne centrifuge auquel il est sensible, à effectuer un traitement d'interface de sortie aboutissant à l'émission d'un message externe (MCF) par ce port.

2. Système selon la revendication 1, caractérisé par le fait que chaque port (1S1,...1S4 ; fig.1) dudit composant conforme (1L) comporte des moyens de stockage de message (M1,...M4) et est apte à connaître l'état du noyau (1N) de ce composant, ce port réagissant à un dit message externe qu'il reçoit en stockant provisoirement ce message et en émettant un message interne centripète de test d'activité auquel ce noyau répond par l'émission d'un message interne centrifuge d'état indiquant l'état d'activité de ce noyau, ce port adressant un dit message interne centripète (N1 Opé. RQ, fig. 3) à ce noyau pour demander un traitement de fond de ce message externe seulement lorsque ce noyau est en état d'effectuer ce traitement, de manière que le fonctionnement de ce composant soit synchrone alors que celui de ce système est asynchrone.

3. Système selon la revendication 1, dans lequel lesdits modules de données comportent d'une part des modules de structure (DS) contenant des données de structure, ces données étant descriptives de la structure de ce composant (1L) et du système et étant seulement lues par les port (1S1,...1S4)) et le noyau de ce composant, d'autre part des modules de contexte (DC) contenant des données de contexte, ces données étant descriptives de l'évolution d'opérations effectuées par ce composant et par le système, et étant aussi bien inscrites que lues par les ports et le noyau de ce composant.

4. Système selon la revendication 1, caractérisé par le fait que ledit noyau (1N) comporte une pluralité de modules de noyau (N1, N2) effectuant respectivement une pluralité de traitements de fond, chacun de ces modules échangeant des messages internes centraux avec d'autres de ces modules, et échangeant desdits messages internes centripètes et centrifuges avec lesdits ports de communication (1S1,...1S4).

5. Système selon la revendication 4, caractérisé par le fait que certains au moins desdits modules de noyau (N1, N2) sont sensibles chacun à un ordre d'arrêt pour interrompre un traitement en cours dans ce module, et à un ordre de réinitialisation pour reprendre le traitement ainsi interrompu, ces ordres d'arrêt et de réinitialisation étant émis par des ports de communication (1S1,...1S4) et/ou par d'autres modules de noyau (N1, N2) du même composant (1L).

6. Procédé de formation d'un système logiciel, ce procédé étant caractérisé par le fait qu'on écrit ce système conformément à l'une quelconque des revendications précédentes.

7. Procédé selon la revendication 6, caractérisé par le fait que les instructions concernant les échanges de message externes (MRQ, MCF, fig. 3) et les instructions concernant les échanges de messages internes (N1. Opé. RQ, N1. Opé. CF) sont écrites en utilisant des règles de nommage analogues.

## Patentansprüche

1. Zusammengesetztes Software-System, bestehend aus Befehlen und Daten, die in einer Quellsprache geschrieben und in eine ausführbare Sprache übersetzt sind, und die in dieser Quellsprache zu einer Mehrzahl von Bausteinen zusammengefaßt sind,
wobei diese Bausteine Software-Bausteine sind, die mit Schnittstellen und diesen Schnittstellen zugeordneten Ports versehen sind. wobei die Port Kommunikationsports sind, die aus Schnittstellen-Verarbeitungsprozeduren zum Senden und Empfangen von lokalen und nicht lokalen externen Nachrichten bestehen,
wobei eine lokale externe Nachricht von einem Sender-Baustein an einen Empfänger-Baustein innerhalb das Systems adressiert ist und eine nicht lokale externe Nachricht mit der Umgebung des Systems ausgetauscht wird,
wobei jeder der Bausteine vorgesehen ist, um Operationen auszuführen, die durch die von diesem Baustein empfangenen externen Nachrichten impliziert werden,
wobei diese Operationen Verarbeitungen umfassen, die innerhalb des Bausteins in Reaktion auf diese empfangenen externen Nachrichten ausgeführt werden und zum Senden von anderen externen Nachrichten führen,
wobei die Gesamtheit der Operationen eines Bausteins die Funktion dieses Bausteins bildet und die Gesamtheit der Funktionen der Bausteine die Funktion des Systems bildet,
dadurch gekennzeichnet, daß die Bausteine wenigstens in ihrer Mehrheit konform mit einer gleichen Struktur sind, derzufolge jeder solche konforme Baustein getrennt umfaßt:
- eine Mehrzahl von Kommunikationsports (1S1, ..1S4), die jeweils einer Mehrzahl von Schnittstellen (I1, ...I4) dieses Bausteins zugeordnet sind,
- einen Kern (1N), der aus Sach-Verarbeitungsprozeduren besteht und mit jedem dieser Ports kommuniziert, um von diesem Port verlangte Sach-Verarbeitungen auszuführen, und
- Datenmodule (DS, DC), die für jeden dieser Ports und den Kern zugänglich sind, um von den Ports und dem Kern eingetragene Daten aufzuzeichnen und von diesen Ports und dem Kern gelesene Daten zu liefern,
wobei jede an einen konformen Baustein adressierte sogenannte lokale externe Nachricht (MRQ, Fig.3) nicht nur die Adresse dieses Bausteins, sondern auch die eines Ports (2S2) dieses Bausteins umfaßt, an den die Nachricht insbesondere adressiert ist,
wobei dieser Port an der Nachricht eine Schnittstellenverarbeitung ausführt, die das Eintragen und/oder Lesen von Daten in diesen Datenmodulen umfassen kann, und eine vollständige Schnittstellenverarbeitung, die zum Senden einer externen Nachricht durch diesen Port führt, oder eine Eingangs-Schnittstellenverarbeitung ist, die zum Senden einer zentripetalen internen Nachricht (N1. Opé. RQ) führt, die von dem Port an den Kern (1N) geschickt wird, um von ihm eine Sach-Verarbeitung zu verlangen,
wobei diese Sach-Verarbeitung das Eintragen und/oder das Lesen von Daten in den Datenmodulen umfassen kann und zum Senden einer zentrifugalen internen Nachricht (N1. Opé. CF) führt, die vom Kern an die diversen Ports dieses Bausteins geschickt wird, wobei diese Nachricht zu diversen Typen gehören kann, und eine Angabe des Typs umfaßt, zu dem sie gehört,
wobei jeder Port dieses Bausteins in der Lage ist, in Reaktion auf Nachrichten, die er empfängt, selektiv für einen Typ von zentrifugaler interner Nachricht sensibel zu werden, und in der Lage ist, in Reaktion auf eine zentrifugale interne Nachricht, für die er sensibel ist, eine Ausgangs- Schnittstellenverarbeitung auszuführen, die zum Senden einer externen Nachricht (MCF) durch diesen Port führt.

2. System nach Anspruch 1, dadurch gekennzeichnet, daß jeder Port (1S1. ...1S4) des konformen Bausteins (1L) Nachrichten-Speichermittel (M1, ...M4) umfaßt und in der Lage ist, den Zustand des Kerns (1N) dieses Bausteins zu ermitteln, wobei der Port auf eine sogenannte externe Nachricht, die er empfängt, reagiert, indem er diese Nachricht zeitweilig speichert und eine zentripetale interne Aktivitätstest-Nachricht an den Kern sendet, auf die der Kern durch Senden einer zentrifugalen internen Zustandsnachricht antwortet, die den Aktivitätszustand dieses Kerns angibt, wobei der Port eine zentripetale interne Nachricht (N1. Opé. RQ), Fig. 3) an diesen Kern nur adressiert, um eine Sach-Verarbeitung der externen Nachricht zu verlangen, wenn dieser Kern bereit ist, diese Verarbeitung auszuführen, so daß die Funktion dieses Bausteins synchron ist, während die des Systems asynchron ist.

3. System nach Anspruch 1, bei dem die Datenmodule einerseits Strukturmodule (DS), die Strukturdaten enthalten, wobei diese Daten für die Struktur des Bausteins (1L) und des Systems beschreibend sind und von den Ports (1S1, ...1S4) und dem Kern dieses Bausteins nur gelesen werden, und andererseits Kontextmodule (DC) umfassen, die Kontextdaten enthalten, wobei diese Daten für den Ablauf von vom Baustein und dem System ausgeführten Operationen beschreibend sind und von den Ports und dem Kern dieses Bausteins sowohl gelesen als auch eingetragen werden.

4. System nach Anspruch 1, dadurch gekennzeichnet, daß der Kern (1N) eine Mehrzahl von Kernmodulen (N1, N2) umfaßt, die jeweils eine Mehrzahl von Sach-Verarbeitungen ausführen, wobei jedes dieser Module zentrale interne Nachrichten mit anderen dieser Module austauscht und zentripetale und zentrifugale interne Nachrichten mit den Kommunikationsports (1S1, ...1S4) austauscht.

5. System nach Anspruch 4, dadurch gekennzeichnet, daß wenigstens bestimmte der Kernmodule (N1, N2) für einen Haltebefehl zum Unterbrechen einer in dem Modul laufenden Verarbeitung und für einen Reinitialisierungsbefehl zum Wiederaufnehmen der so unterbrochenen Verarbeitung sensibel sind, wobei Halte- und Reinitialisierungsbefehl von Kommunikationsports (1S1, ...1S4) und/oder anderen Kernmodulen (N1, N2) desselben Bausteins (1L) gesendet werden.

6. Verfahren zu Herstellung eines Software-Systems, dadurch gekennzeichnet, daß das System konform mit einem der vorhergehenden Ansprüche geschrieben wird.

7. Verfahren nach Anspruch 6, dadurch gekennzeichnet, daß die Befehle, die die externen Nachrichtenaustäusche betreffen (MRQ, MCF, Fig. 3) und die Befehle, die die internen Nachrichtenaustäusche betreffen (N1. Opé. RQ, N1. Opé. CF) unter Verwendung analoger Bezeichnungsregeln geschrieben werden.

## Claims

1. Composite software system comprising instructions and data written in source language and adapted to be translated into machine language and grouped in said source language into a plurality of software components having interfaces and communication ports associated with said interfaces made up of interface processing procedures for sending and receiving local and non-local external messages, a local external message being sent by an originator component to a recipient component within the system and a non-local external message being exchanged with the environment external to the system, each component being adapted to execute operations indicated by the external messages received by said component and comprising processing carried out within said component in response to said received external messages and leading to the sending of other external messages, the set of operations of a component constituting the function of said component and the set of functions of said components constituting the function of the system,
which system is characterised in that at least most of said components have a standardised structure such that each such standardised component (1L, fig. 1) comprises:
- a plurality of communication ports (1S1,...1S4) respectively associated with a plurality of interfaces (I1,...I4) of said component,
- a kernel (1N) comprising background processing procedures and communicating with each port to execute background processing tasks requested by said port, and
- data modules (DS, DC) written and read by each port and said kernel, each local external message (MRQ, fig. 3) sent to a standardised component comprising not only the address of said component but also that of a port (2S2) of said component to which said message is specifically addressed, said port carrying out on said message interface processing optionally comprising the writing and/or reading of data in said data modules and constituting either full interface processing leading to the sending of an external message by said port or input interface processing leading to the sending of a centripetal internal message (N1.Ope.RQ) by said port to the kernel (1N) to request background processing tasks optionally comprising the writing and/or the reading of data in said data modules, said background processing leading to the sending of a centrifugal internal message (N1.Ope.CF) by said kernel to the various ports of said component, said message being of one of a plurality of types and comprising an indicator of its type, each port of said component being adapted to respond to messages that it receives by becoming selectively responsive to one type of centrifugal internal message and to respond to a centrifugal internal message of the type to which it is responsive by executing output interface processing leading to the sending of an external message (MCF) by said port.

2. System according to claim 1 characterised in that each port (1S1,...1S4; fig. 1) of said standardised component (1L) comprises message storage means (M1,...M4) and is able to determine the status of the kernel (1N) of said component, said port responding to an external message it receives by storing said message temporarily and sending an activity test centripetal internal message to which said kernel responds by sending a status centrifugal internal message indicating its status, said port sending a centripetal internal message (N1.Ope.RQ, fig. 3) to said kernel to request background processing of said external message only if said kernel is in a position to carry out such processing whereby operation of said component is synchronous whereas that of said system is asynchronous.

3. System according to claim 1 wherein said data modules comprise structure modules (DS) containing structure data describing the structure of said component (1L) and said system and which is only read by the ports (1S1,...1S4) and the kernel of said component and context modules (DC) containing context data describing the evolution of operations effected by said component and by the system and written and read by the ports and the kernel of said component.

4. System according to claim 1 characterised in that said kernel (1N) comprises a plurality of kernel modules (N1, N2) respectively executing a plurality of background processing tasks, each of said modules exchanging central internal messages with others of said modules and exchanging centripetal and centrifugal internal messages with said communication ports (1S1,...1S4).

5. System according to claim 4 characterised in that at least some of said kernel modules (N1, N2) are each responsive to a halt instruction to interrupt processing in progress in said module and to a reset instruction to resume the processing interrupted in this way, said halt and reset instructions being sent by communication ports (1S1,...1S4) and/or other kernel modules (N1, N2) of the same component (1L).

6. Method of forming a software system characterised in that said system is written as claimed in any one of the preceding claims.

7. Method according to claim 6 characterised in that instructions concerning the exchange of external messages (MRQ, MCF, fig. 3) and instructions concerning the exchange of internal messages (N1.Ope.RQ, N1.Ope.CF) are written using analogous naming rules.
